# EUROPÄISCHE PATENTSCHRIFT

(11) **EP 3 417 025 B1**
(45) Veröffentlichungstag und Bekanntmachung des Hinweises auf die Patenterteilung: **08.07.2020**
(21) Anmeldenummer: 16838021.0
(22) Anmeldetag: 13.12.2016
(51) Int. Cl.: C09J 5/00, B32B 27/00

(54) **VERFAHREN ZUR HAFTVERBESSERUNG VON SILIKON AUF EINER THERMOPLASTISCHEN OBERFLÄCHE**
PROCESS FOR IMPROVING THE ADHESION OF SILICONE ON A THERMOPLASTIC SURFACE
PROCÉDÉ D' AMÉLIORATION DU COLLAGE DE SILICONE SUR UNE SURFACE THERMOPLASTIQUE

(30) Priorität: 20.02.2016 DE 102016002011
(43) Veröffentlichungstag der Anmeldung: 26.12.2018
(73) Patentinhaber: Universität Kassel, 34125 Kassel (DE)
(72) Erfinder: GIESEN, Ralf Urs, 34323 Malsfeld (DE); RÜPPEL, Annette, 34212 Melsungen (DE); HARTUNG, Michael, 34593 Knüllwald (DE); HEIM, Hans-Peter, 33332 Gütersloh (DE)
(74) Vertreter: Patentanwälte Walther Hinz Bayer PartGmbB
(86) Internationale Anmeldenummer: PCT/DE2016/100581
(87) Internationale Veröffentlichungsnummer: WO 2017/140288

(56) Entgegenhaltungen:
- EP-A1- 0 575 798
- WO-A1-2013/068238

## Beschreibung

Die Erfindung betrifft ein Verfahren zur Verbesserung der Haftung von Silikon auf der Oberfläche eines Thermoplasten. Weiterhin richtet sich die Erfindung auf einen Verbund aus einem Thermoplasten und einem auf einer Oberfläche des Thermoplasten aufgebrachten Silikons.

### STAND DER TECHNIK

Aus der US 8,293,061 B2 ist ein Verfahren zum Bonden von zwei thermoplastischen Oberflächen bekannt, und es wird angegebenen, dass die thermoplastischen Oberflächen mit UV-C-Strahlung bestrahlt werden können, um die Oberflächen zu aktivieren. Dadurch wird die Bondfestigkeit der thermoplastisch-thermoplastischen Verbindung erhöht. Eine derartige Oberflächenaktivierung basiert auf der Erzeugung von Sauerstoffradikalen aus der Luft, die mit Radikalen an der Materialoberfläche reagieren. Dadurch entsteht eine chemisch veränderte Oberfläche des Thermoplasten, Folglich können die beiden Thermoplastoberflächen aufeinander gebracht und im Bondverfahren miteinander verbunden werden.

Sollen ungleiche Materialien miteinander verbunden werden, also beispielsweise ein Silikon und ein Thermoplast, so sind verschiedene Aktivierungsverfahren bekannt, um die Oberfläche des Thermoplasten zu aktivieren, damit eine Haftungsverbesserung des Silikons erreicht wird. Dabei soll das Silikon beispielsweise im Spritzgussverfahren auf die Oberfläche des Thermoplasten aufgebracht werden. Bekannt sind Haftvermittler, die als Additivierung im Werkstoff des Thermoplasten vorliegen können, ebenfalls ist es bekannt, den Werkstoff des Silikons entsprechend zu additivieren, um einen Haftvermittler zu schaffen. Nachteilhafterweise führen derartige Additivierungen zu einer erheblichen Kostensteigerung bei der Beschaffung entsprechend additivierter Thermoplasten oder Silikone.

Weiterhin ist eine Aktivierung der Thermoplast-Oberfläche mittels einer sogenannten Koronabehandlung bekannt, und der Koronaprozess basiert auf einer alternierenden elektrischen Entladung in Luftatmosphäre. Erzeugte energiereiche Elektronen bilden Radikale auf der Materialoberfläche, die mittels ebenfalls gebildeter Sauerstoffradikalen aus der Luft reagieren.

Ein weiteres physikalisches Verfahren zur Oberflächenbehandlung ist die Beflammung. Durch das Einwirken der Gasflamme werden an der Substratoberfläche Molekülbindungen aufgebrochen, die den Einbau von Radikalen aus der Flamme in die Molekülkette ermöglichen. Die an der Substratoberfläche entstandenen polaren Gruppen sind in der Lage, sich mit anderen Materialien zu verbinden.

Neben einer Beflammung ist ferner eine Aktivierung der Thermoplast-Oberfläche mittels eines Plasmas bekannt. Bei einer Plasmaaktivierung wird eine gezielte Modifizierung einer Oberflächenspannung des Thermoplasten durch Plasmaenergie erreicht, wodurch ebenfalls eine erhebliche Haftungsverbesserung erreicht wird.

Mit den verschiedenen aus dem Stand der Technik bekannten Verfahren zur Oberflächenaktivierung eines Thermoplasten für die Haftvermittlung zu einem Silikon gehen verschiedene Nachteile einher. Beispielsweise kann es bei thermischen Verfahren wie dem Beflammen zu einem Verzug des Werkstückes kommen, ebenfalls können sich Farbveränderungen der Oberfläche ergeben. Bei der Plasmatechnik oder der Koronabehandlung sind aufwendige Anlagentechniken erforderlich, und es entstehen insbesondere bei hohen elektrischen Spannungen von Anlagenbauteilen Gefahren für den Bediener. Hohe Betriebskosten, ein hoher Energiebedarf und hohe Investitionskosten sind weitere Faktoren, die einen alternativen Prozess zur Aktivierung der Oberfläche eines Thermoplasten für die Haftvermittlung eines Silikons erforderlich erscheinen lassen.

### OFFENBARUNG DER ERFINDUNG

Es ist die Aufgabe der Erfindung, ein Verfahren zur Verbesserung der Haftung von Silikon auf der Oberfläche eines Thermoplasten zu entwickeln, mit dem die Nachteile des vorstehend beschriebenen Standes der Technik vermieden werden und das mit einfachen Mitteln ausgeführt werden kann und entsprechend wirkungsvoll ist. Insbesondere soll eine deutliche Haftverbesserung eines Silikons auf der Öberflache eines Thermoplasten erreicht werden.

Diese Aufgabe wird ausgehend von einem Verfahren gemäß dem Oberbegriff des Anspruches 1 und ausgehend von einem Verbund gemäß Anspruch 9 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass die Oberfläche des Thermoplasten zur Verbesserung der Haftung von Silikon auf der Öberflache mit einer UV-C-Strahlung bestrahlt wird.

Die Erfindung nutzt UV-C-Strahlung zur Aktivierung der Oberfläche des Thermoplasten, um speziell eine Verbesserung der Haftung von Silikon auf der Oberfläche zu erreichen. Wird das Silikon nach der Bestrahlung auf die Oberfläche aufgebracht, so ist eine deutliche Haftungsverbesserung des Silikons auf dem Thermoplasten zu verzeichnen. Das Verfahren sieht dabei im Speziellen eine selektive Bestrahlung der Oberfläche in den Bereichen vor, in denen das Silikon auf die Oberfläche aufgebracht werden soll. Angrenzende Oberflächenbereiche des Thermoplasten, an die das Silikon nicht anhaften soll, können beispielsweise vor der UV-C-Strahlung abgedeckt werden.

Die UV-C-Strahlung wird mit besonderem Vorteil mit einer Wellenlänge von 100nm bis 280nm, vorzugsweise von 150nm bis 200nm und besonders bevorzugt von 180nm bis 190nm bereitgestellt, Besonders gute Ergebnisse konnten überraschend mit einer Wellenlänge der UV-C-Strahlung von 185nm erzielt werden.

Mit weiterem Vorteil wird die UV-C-Strahlung mittels einer Strahlungsquelle erzeugt, wobei die Strahlungsquelle während der Bestrahlung über der Oberfläche des Thermoplasten bewegt wird. Beispielsweise kann die UV-C-Strahlung die Oberflächenbereiche des thermoplastischen Werkstückes so abfahren, dass die Bereiche der Öberflache aktiviert werden, die mit dem Silikon haftvermittelt werden sollen. Auch ist es denkbar, dass die Strahlungsquelle ruhend über der Oberfläche des Thermoplasten angeordnet und betrieben wird, und beispielsweise kann eine entsprechende Maske Verwendung finden, um gezielte Bereiche zu aktivieren und weitere Bereiche von der Aktivierung auszuschließen.

Gemäß einer vorteilhaften Weiterbildung des erfindungsgemäßen Verfahrens wird die Bestrahlung der Oberfläche des Thermoplasten innerhalb einer nach außen abgedunkelten Bestrahlungskammer ausgeführt. Damit ist die Bestrahlungskammer insbesondere so ausgebildet, dass keine UV-C-Strahlung aus der Bestrahlungskammer austreten kann. Somit wird auf einfache Weise eine Gefahr beispielsweise für einen Bediener ausgeschlossen, die von der UV-C-Strahlung ausgeht. Die Bestrahlungskammer kann so ausgeführt sein, dass das thermoplastische Werkstück in die Bestrahlungskammer eingelegt werden kann. Ferner kann die Strahlungsquelle innerhalb der Bestrahlungskammer angeordnet sein.

Mit weiterem Vorteil wird die Bestrahlung der Oberfläche des Thermoplasten mittels der UV-C-Strahlung unter Bildung von Ozon ausgeführt, wobei das Ozon während der Bestrahlung mit der Oberfläche wechselwirkt. Bei der Bestrahlung von thermoplastischen Materialien mit UV-C-Strahlung wurde festgestellt, dass durch die Wechselwirkung mit dem Luftsauerstoff Ozon gebildet wird, wobei das Ozon wiederum unter Wechselwirkung mit der Oberfläche des Thermoplasten eine deutliche Verbesserung der Aktivierung der Oberfläche erzeugt. Folglich wird das gebildete Ozon zusätzlich genutzt, um die Verbesserung der Haftung von Silikon auf der Oberfläche des Thermoplasten zu erzeugen.

Wird die Bestrahlung innerhalb eines geschlossenen Raumes insbesondere innerhalb einer nach außen abgedunkelten Bestrahlungskammer ausgeführt, so wird in Verbindung mit dem Ozon insbesondere der Vorteil erreicht, dass das Ozon im oberflächennahen Bereich des Thermoplasten verbleibt und eine entsprechende Wechselwirkung mit der Oberfläche eingehen kann, Zur Verstärkung dieses Effektes kann zudem vorgesehen sein, die Bestrahlungskammer entsprechend zu optimieren, um möglichst eine intensive Wechselwirkung des Ozons mit der Oberfläche sicherzustellen. Beispielsweise wird die Bestrahlungskammer in der Größe so klein gewählt, dass eine möglichst hohe Konzentration des Ozons über der Oberfläche des Thermoplasten vorherrscht.

Die Dauer der Bestrahlung beträgt beispielsweise drei Sekunden bis 15 Minuten, Insbesondere beträgt die Bestrahlungsdauer fünf Sekunden bis 30 Sekunden, womit bereits sehr gute Haftungsergebnisse des Silikons auf der thermoplastischen Oberfläche erzielt werden können.

Das Verfahren sieht zum einen die Bereitstellung eines thermoplastischen Werkstoffes vor, zum anderen wird ein Silikon bereitgestellt, das mit dem Thermoplasten verbunden werden soll. Mit besonderem Vorteil wird als Thermoplast ein Polyamid, beispielsweise ein PA6 GF25, Polycarbonat, ein Polypropylen, ein Methylmethacrylat-Acrylnitril-Butadien-Styrol, ein Methylmethacrylat oder ein Acrylnitril-Butadien-Styrol bereitgestellt. Als Silikon kann ein Liquid Silicone Rubber oder ein High Consistency Silicone Rubber bereitgestellt werden. Das Silikon in Form des Liquid Silicone Rubber, kurz LSR, wird insbesondere als selbsthaftendes LSR bereitgestellt.

Das Verfahren eignet sich insbesondere zur Vorbereitung der Oberfläche eines Thermoplasten, um das Silikon an den Thermoplasten im Spritzgussverfahren anzuspritzen. Die Vulkanisationstemperatur beträgt dabei beispielsweise 1 70° für PA6 GF25, 140° für Polycarbonat und 80° für Polypropylen, MABS, PMMA und ABS. Die Vulkanisationszeit kann dabei von 20 Sekunden bis drei Stunden dauern. Abschälversuche haben gezeigt, dass abhängig von der Materialpaarung der Schälwiderstand größer sein kann als die Materialfestigkeit, beispielsweise bei der Verwendung von Polycarbonat als thermoplastischer Werkstoff, wobei der Schälwiderstand ebenfalls größer als die Materialfestigkeit ist bei Verbindungen mit MABS, PMMA und ABS, auf welche selbsthaltender LSR bei der Vorbehandlung durch UV-C Strahlung aufgebracht wurde, Der Auftrag auf PP, MABS, PMMA und ABS kann dabei manuell erfolgen. Polycarbonat als thermoplastischer Kunststoff wird insbesondere im Spritzguss hergestellt.

Die Erfindung richtet sich weiterhin auf einen Verbund aus einem Thermoplasten und einem auf einer Oberfläche des Thermoplasten ausgebrachten Silikons, wobei die Oberfläche des Thermoplasten mit dem vorstehend beschriebenen Verfahren aktiviert wurde. Insbesondere wurde die Oberfläche mit einer UV-C-Strahlung bestrahlt. Der Verbund zeichnet sich insbesondere dadurch aus, dass zunächst ein thermoplastisches Werkstück bereitgestellt wird, anschließend erfolgt die Bestrahlung der Oberfläche mit UV-C-Strahlung und schließlich wird das Silikon auf die aktivierte Oberfläche mittels eines Spritzgussverfahrens aufgebracht. Als Verbund zwischen einem Thermoplasten und einem Silikon kann ein Stumpfstoß, T-Stoß, eine überlappende Verbindung oder eine vollständige oder partielle flächige Verbindung vorgesehen sein.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Ansicht eines Thermoplasten mit einer Oberfläche, die zur Verbesserung der Haftung von Silikon auf der Oberfläche mit einer UV-C-Strahlung bestrahlt wird,
- Figur 2: eine quergeschnittene Ansicht durch einen Aufbau zur Bestrahlung eines Thermoplasten mit einer UV-C-Strahlung mittels einer Strahlungsquelle,
- Figur 3: ein Verbund aus einem Thermoplasten mit einem aufgebrachten Silikon und
- Figur 4: eine Tabelle mit gemessenen Schälwiderständen für verschiedene Materialpaarungen aus Thermoplasten und Silikonen.

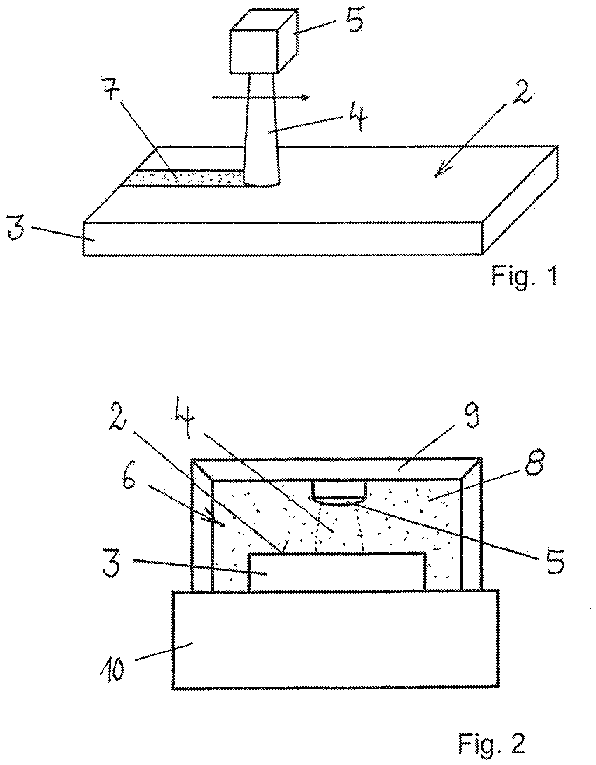

Figur 1 zeigt in schematischer Weise die Bestrahlung einer Oberfläche 2 eines Thermoplasten 3 mit einer UV-C-Strahlung 4. Zur Erzeugung der UV-C-Strahlung 4 ist schematisch eine Strahlungsquelle 5 gezeigt, und die Strahlungsquelle 5 ist beispielsweise durch eine Gasentladungslampe gebildet, beispielsweise durch eine Niederdrucklampe in Form einer Quecksilberdampflampe. Die Bestrahlung der Oberfläche 2 führt zu einer Aktivierung, die zur Verbesserung der Haftung von Silikon auf der Oberfläche 2 dienen soll. Wird das Silikon beispielsweise nur in diskreten Bereichen auf der Oberfläche 2 aufgebracht, beispielsweise durch einen Spritzgussprozess, so wird auch nur ein Teil der Oberfläche 2 aktiviert, sodass schematisch eine aktivierte Oberfläche 7 gezeigt ist, über die die UV-C-Strahlung 4 geführt wurde, was angedeutet ist mit einem Pfeil, Alternativ zum Abscannen der Oberfläche zur Erzeugung der aktivierten Oberfläche 7 mit der UV-C- Strahlung 4 können auch eine Maske oder sonstige Abschattungsmittel Verwendung finden, um Teile der Oberfläche 2 von der Bestrahlung fernzuhalten und Teile der Oberfläche 2 zu aktivieren, wie mit der aktivierten Oberfläche 7 gezeigt.

Figur 2 zeigt einen Aufbau zur Bestrahlung der Oberfläche 2 eines Thermoplasten 3, und der Aufbau umfasst eine Werkstückaufnahme 10 zur Aufnahme des Thermoplasten 3, wobei die zu aktivierende Oberfläche 2 in Richtung zu einer Strahlungsquelle 5 gerichtet ist. Der Thermoplast 3 befindet sich in einer Bestrahlungskammer 6, die durch ein Gehäuse 9 umgrenzt ist. Wird die Oberfläche 2 des Thermoplasten 3 mit UV-C-Strahlung 4 bestrahlt, so entsteht Ozon 8, und das Ozon 8 wird durch die Bestrahlungskammer 6 in Kontakt mit der Oberfläche 2 gehalten, sodass das Ozon 8 mit der Oberfläche 2 wechselwirken kann. Durch das Vorhandensein von Ozon 8, welches durch den eigentlichen Bestrahlungsprozess gebildet wird, wird der Aktivierungsprozess verstärkt, wodurch die Haftung von Silikon auf der Oberfläche 2 des Thermoplasten 3 weiter verbessert wird.

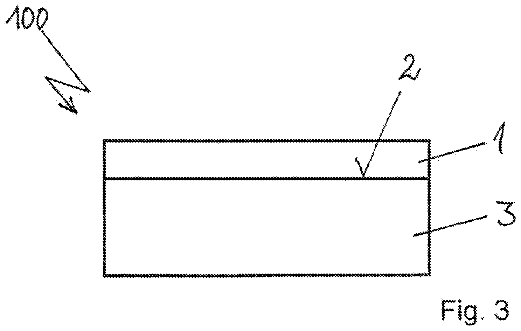

Figur 3 zeigt einen Verbund 100 aus einem Thermoplasten 3 und einem Silikon 1, und das Silikon 1 haftet an der Oberfläche 2 an, die mit dem zuvor beschriebenen Verfahren aktiviert wurde, Der Verbund 100 kann dabei jede Form von Thermoplasten und Silikonen umfassen, wobei der Thermoplast 3 beispielsweise ein glasfaserverstärktes Polyamid, ein Polycarbonat, ein Polypropylen, ein Methylmethacrylat-Acrylnitril-Butadien-Styrol, ein Methylmethacrylat oder ein Acrylnitril-Butadien-Styrol umfassen kann und wobei der Thermoplast 3 einen Körper, beispielsweise ein Bauteil bildet. Das Silikon 1 kann ein Liquid Silicone Rubber oder ein High Consistency Silicone Rubber umfassen, und das Silikon 1 dient beispielsweise als Dichtlippe auf dem Bauteil aus thermoplastischem Material, beispielsweise eine Dichtlippe für einen Gehäusedeckel, Softgriff für eine Bürste, Tasten für die Bedienung eines Elektrogerätes, Membrane in thermoplastischen Bauteilen, Scheibenwischer und dergleichen.

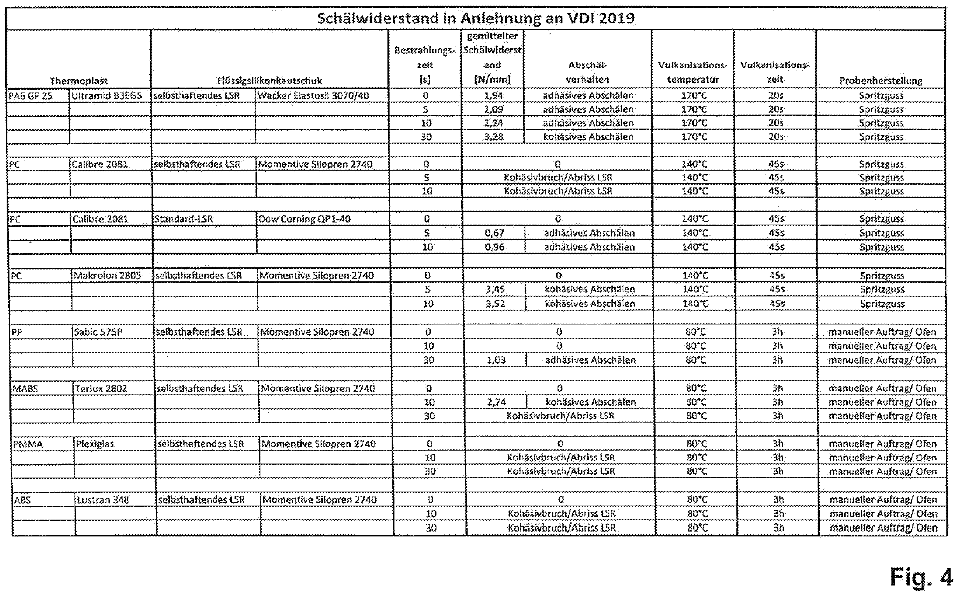

Figur 4 zeigt eine Tabelle mit gemessenen Schälwidersländen für verschiedene Materialpaarungen aus Thermoplasten und Silikonen. Als Thermoplasten sind die Kunststoffe PA6 GF25 (glasfaserverstärktes Polyamid, PA), verschiedene Polycarbonate (PC), Polypropylen (PP), Methylmethacrylat-Acrylnitril-Butadien-Styrol (MABS), Methylmethacrylat und Acrylnitril-Butadien-Styrol (ABS) aufgeführt. Als Silikon ist bis auf eine gezielte Materialpaarung mit einem Polycarbonat ein selbsthaftender LSR aufgeführt, wobei mit dem Polycarbonat (Calibre 2081) ein Standard- LSR gepaart wurde. Das LSR- Silikon entspricht dabei einem Flüssigsilikonkautschuk.

Die Schälversuche wurden in Anlehnung an die VDI Richtlinie 2019 durchgeführt. Die Bestrahlzeiten geben dabei die Zeiten wieder, mit denen die Oberfläche der Thermoplasten mit der UV-C-Strahlung bestrahlt wurde. Sind keine gemittelten Schälwiederstände angegeben, so liegt ein Kohäsivbruch vor, d.h. dass das Silikonmaterial in sich und nicht an der Grenzfläche zum Thermoplasten gerissen ist. Folglich ist dann der Schälwiderstand größer als die Materialfestigkeit des LSR.

Die Vulkanisationstemperatur bezieht sich auf die Temperatur, bei der der Flüssigsilikonkautschuk ausvulkanisiert wurde, wobei zugleich die Vulkanisationsdauer angegeben ist Die Probenherstellung beschreibt, in welcher Form der Flüssigsilikonkautschuk auf der Oberfläche des Thermoplasten aufgetragen wurde.

Wie die Schälversuche zeigen, steigt allgemein der Schälwiderstand mit der Dauer der UV-C-Bestrahlung, wobei die Bestrahlung bis zu 30 Sekunden vorgenommen wurde, Besonders gute Ergebnisse wurden dabei mit Bestrahlungsdauern ab 5 Sekunden für das Material Polycarbonat gepaart mit selbsthaftendem LSR und mit Standard-LSR erzielt. Bei einer Bestrahlungsdauer von 10 Sekunden wurden gute Abschälergebnisse mit MABS, PMMA und ABS erzielt.

### Bezugszeichenliste:

- 1: Silikon
- 2: Oberfläche
- 3: Thermoplast
- 4: UV-C-Strahlung
- 5: Strahlungsquelle
- 6: Bestrahlungskammer
- 7: aktivierte Oberfläche
- 8: Ozon
- 9: Gehäuse
- 10: Werkstückaufnahme

- 100: Verbund

## Patentansprüche

1. Verfahren zur Verbesserung der Haftung von Silikon (1) auf der Oberfläche (2) eines Thermoplasten (3),
**dadurch gekennzeichnet,**
**dass** die Oberfläche (2) des Thermoplasten (3) mit einer UV-C-Strahlung (4) bestrahlt wird.

2. Verfahren nach Anspruch 1,
**dadurch gekennzeichnet,**
**dass** die UV-C-Strahlung (4) mit einer Wellenlänge von 100nm bis 280nm oder von 150nm bis 200nm oder von 180nm bis 190nm bereitgestellt wird.

3. Verfahren nach Anspruch 1 oder 2,
**dadurch gekennzeichnet,**
**dass** die UV-C-Strahlung mittels einer Strahlungsquelle (5) erzeugt wird, welche Strahlungsquelle (5) während der Bestrahlung über der Oberfläche (2) des Thermoplasten (3) bewegt wird.

4. Verfahren nach einem der Ansprüche 1 bis 3,
**dadurch gekennzeichnet,**
**dass** die Bestrahlung der Oberfläche (2) des Thermoplasten (3) innerhalb einer nach außen abgedunkelten Bestrahlungskammer (6) ausgeführt wird.

5. Verfahren nach einem der vorgenannten Ansprüche,
**dadurch gekennzeichnet,**
**dass** die Bestrahlung der Oberfläche (2) des Thermoplasten (3) unter Bildung von Ozon (8) ausgeführt wird, wobei das Ozon (8) währen der Bestrahlung mit der Oberfläche (2) wechselwirkt.

6. Verfahren nach einem der vorgenannten Ansprüche,
**dadurch gekennzeichnet,**
**dass** die Bestrahlung mit einer Strahlungsleistung von 5W bis 15W und/oder dass die Bestrahlung mit einer Quecksilberdampflampe als Strahlungsquelle (5) ausgeführt wird.

7. Verfahren nach einem der vorgenannten Ansprüche,
**dadurch gekennzeichnet,**
**dass** die Bestrahlung mit einer Strahlungsdauer von 3sec. bis 15min. ausgeführt wird.

8. Verfahren nach einem der vorgenannten Ansprüche,
**dadurch gekennzeichnet,**
**dass** als Thermoplast (3) ein glasfaserverstärktes Polyamid, ein Polycarbonat, ein Polypropylen, ein Methylmethacrylat-Acrylnitril-Butadien-Styrol, ein Methylmethacrylat oder ein Acrylnitril-Butadien-Styrol bereitgestellt wird und/oder dass als Silikon (1) ein Liquid Silicone Rubber oder ein High Consistency Silicone Rubber bereitgestellt wird.

9. Verbund (100) aus einem Thermoplasten (3) und einem auf einer Oberfläche (2) des Thermoplasten (3) angeordneten Silikons (1), wobei die Oberfläche (2) mit einem Verfahren gemäß einem der Ansprüche 1 bis 8 aktiviert wurde und die Bindung des Silikons (1) mit der Oberfläche (2) des Thermoplasten (3) auf der Erzeugung von Sauerstoffradikalen aus der Luft durch eine UV-C-Bestrahlung (4) der Oberfläche (2) des Thermoplasten (3) basiert.

10. Verbund (100) gemäß Anspruch 9,
**dadurch gekennzeichnet,**
**dass** das Silikon (1) auf die aktivierte Oberfläche (7) mittels eines Spritzgussverfahrens aufgebracht wird.

## Claims

1. A method for improving the adhesion of silicone (1) to the surface (2) of a thermoplastic (3),
**characterized in that**
the surface (2) of the thermoplastic (3) is irradiated with UV-C radiation (4).

2. The method according to claim 1,
**characterized in that**
the UV-C radiation (4) is provided with a wavelength of 100nm to 280nm or of 150nm to 200nm or of 180nm to 190nm.

3. The method according to claim 1 or 2,
**characterized in that**
the UV-C radiation is generated by means of a radiation source (5), said radiation source (5) being moved over the surface (2) of the thermoplastic (3) during irradiation.

4. The method according to one of the claims 1 to 3,
**characterized in that**
the irradiation of the surface (2) of the thermoplastic (3) is carried out inside an irradiation chamber (6) which is darkened with respect to the outside.

5. The method according to one of the aforementioned claims,
**characterized in that**
the irradiation of the surface (2) of the thermoplastic (3) is carried out under formation of ozone (8), wherein the ozone (8) interacts with the surface (2) during the irradiation.

6. The method according to one of the aforementioned claims,
**characterized in that**
the irradiation is carried out with a radiation power of 5W to 15W and/or that the irradiation is carried out with a mercury vapor lamp as a radiation source (5).

7. The method according to one of the aforementioned claims,
**characterized in that**
the irradiation is carried out with a radiation duration of 3 sec. to 15 min.

8. The method according to one of the aforementioned claims,
**characterized in that**
a glass fiber reinforced polyamide, a polycarbonate, a polypropylene, a methyl methacrylate-acrylonitrile-butadiene-styrene, a methyl methacrylate or an acrylonitrile butadiene styrene is provided as thermoplastic (3) and/or that a Liquid Silicone Rubber or a High Consistency Silicone Rubber is provided as silicone (1).

9. A composite (100) of a thermoplastic (3) and a silicone (1) arranged on a surface (2) of the thermoplastic (3), wherein the surface (2) has been activated using a method according to one of the claims 1 to 8 and the bonding of the silicone (1) to the surface (2) of the thermoplastic (3) is based on the generation of oxygen radicals from the air by UV-C irradiation (4) of the surface (2) of the thermoplastic (3).

10. The composite (100) according to claim 9, **characterized in that** the silicone (1) is applied onto the activated surface (7) by means of an injection molding process.

## Revendications

1. Procédé pour améliorer l'adhérence du silicone (1) à la surface (2) d'un thermoplastique (3),
**caractérisé en ce que**
la surface (2) du thermoplastique (3) est irradiée avec un rayonnement UV-C (4).

2. Procédé selon la revendication 1,
**caractérisé en ce que**
le rayonnement UV-C (4) est délivré avec une longueur d'onde de 100 nm à 280 nm ou de 150 nm à 200 nm ou de 180 nm à 190 nm.

3. Procédé selon la revendication 1 ou 2,
**caractérisé en ce que**
le rayonnement UV-C est généré au moyen d'une source de rayonnement (5), laquelle source de rayonnement (5) est déplacée au-dessus de la surface (2) du thermoplastique (3) pendant l'irradiation.

4. Procédé selon l'une des revendications 1 à 3,
**caractérisé en ce que**
l'irradiation de la surface (2) du thermoplastique (3) est effectuée à l'intérieur d'une chambre d'irradiation (6) qui est obscurcie par rapport à l'extérieur.

5. Procédé selon l'une des revendications précédentes,
**caractérisé en ce que**
l'irradiation de la surface (2) du thermoplastique (3) est effectuée tout en formant de l'ozone (8), où l'ozone (8) interagit avec la surface (2) pendant l'irradiation.

6. Procédé selon l'une des revendications précédentes,
**caractérisé en ce que**
l'irradiation est effectuée avec une puissance de rayonnement de 5W à 15W et/ou que l'irradiation est effectuée avec une lampe à vapeur de mercure comme source de rayonnement (5).

7. Procédé selon l'une des revendications précédentes,
**caractérisé en ce que**
l'irradiation est effectuée avec une durée d'irradiation de 3 sec. à 15 min.

8. Procédé selon l'une des revendications précédentes,
**caractérisé en ce qu'**
un polyamide renforcé de fibres de verre, un polycarbonate, un polypropylène, un méthacrylate de méthyle-acrylonitrile-butadiène-styrène, un méthacrylate de méthyle ou un acrylonitrile butadiène styrène est fourni comme thermoplastique (3) et/ou qu'un caoutchouc de silicone liquide (Liquid Silicone Rubber) ou un caoutchouc de silicone à haute consistance (High Consistency Silicone Rubber est fourni comme silicone (1).

9. Composite (100) de thermoplastique (3) et de silicone (1) disposé sur une surface (2) du thermoplastique (3), **caractérisé en ce que** la surface (2) a été activée par un procédé selon l'une des revendications 1 à 8 et que la liaison du silicone (1) avec la surface (2) du thermoplastique (3) est basée sur la génération de radicaux d'oxygène à partir de l'air par irradiation UV-C (4) de la surface (2) du thermoplastique (3).

10. Composite (100) selon la revendication 9,
**caractérisé en ce que**
le silicone (1) est appliqué sur la surface activée (7) au moyen d'un procédé de moulage par injection.
